(19) Europäisches Patentamt
European Patent Office
Office européen des brevets

(11) Veröffentlichungsnummer: **0 236 273**
**B1**

(12) **EUROPÄISCHE PATENTSCHRIFT**

(45) Veröffentlichungstag der Patentschrift: **08.08.90**

(21) Anmeldenummer: **87810117.9**

(22) Anmeldetag: **02.03.87**

(51) Int. Cl.$^5$: **A 01 N 47/36** // (A01N47/36, 43:70, 43:42, 39:00, 37:48, 37:46, 37:40, 37:34)

(54) **Synergistisches Mittel und Verfahren zur selektiven Unkrautbekämpfung in Getreide.**

(30) Priorität: **07.03.86 CH 936/86**

(43) Veröffentlichungstag der Anmeldung:
**09.09.87 Patentblatt 87/37**

(45) Bekanntmachung des Hinweises auf die Patenterteilung:
**08.08.90 Patentblatt 90/32**

(84) Benannte Vertragsstaaten:
**AT BE CH DE ES FR GB GR IT LI NL SE**

(56) Entgegenhaltungen:
**keine**

(73) Patentinhaber: **CIBA-GEIGY AG**
**Klybeckstrasse 141**
**CH-4002 Basel (CH)**

(72) Erfinder: **Schmidli, Wilhelm**
**Biffigstrasse 141**
**CH-4333 Münchwilen (CH)**
Erfinder: **Gerber, Hans-Rudolf, Dr.**
**Blözenweg 49**
**CH-4133 Pratteln (CH)**
Erfinder: **Nyffeler, Andreas, Dr.**
**Gründlerstrasse 4**
**CH-4312 Magden (CH)**
Erfinder: **Ebner, Ludwig, Dr.**
**Eggmattweg 6**
**CH-4312 Magden (CH)**

**EP 0 236 273 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein synergistisches Mittel, welches eine herbizide Wirkstoffkombination enthält, die sich hervorragend zur selektiven Unkrautbekämpfung in Getreidekulturen eignet. Die Erfindung betrifft auch ein Verfahren zur Bekämpfung von Unkräutern in Getreide und die Verwendung des neuen Mittels.

Die zur Zeit häufigsten und wichtigsten Unkräuter in Getreide sind Spezies der Gattungen Avena fatua (Flaughafer), Lolium (Lolch), Setaria (Borstenhirse), Sinapis (Senf), Stellaria (Sternmiere) und Veronica (Ehrenpreis).

Als hervorragendes Selektivherbizid gegen Unkräuter in Kulturpflanzen hat sich N-[2-(2-Chloräthoxy)-phenylsulfonyl]-N'-(4-methoxy-6-methyl-1,3,5-triazin-2-yl)-harnstoff der Formel I

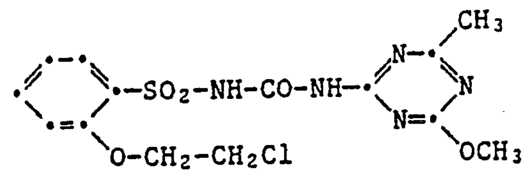

(I)

erwiesen. Dieser Wirkstoff ist mit seiner Herstellung und Verwendung in der publizierten Europäischen Patentanmeldung EP—A—44808 beschrieben.

Andererseits sind Verbindungen der Formeln II, III, IV, V, VIII, IX oder X ebenfalls als selektive Herbizide bekannt. Sie sind teilweise bereits im Handel erhältlich.

Unter die Formel II

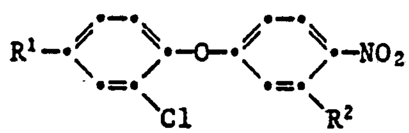

(II)

worin $R^1$ für Chlor oder Trifluormethyl und $R^2$ für Wasserstoff, $C_1$—$C_4$-Alkoxycarbonyl, $C_1$—$C_4$-Alkoxy,

$—COONa$, $—COOK$, $—COOH$, $—CO—NH—SO_2CH_3$, $—COO—CH(CH_3)—COOC_2H_5$,

$—C(CH_3)=N—O—CH_2—COOCH_3$ oder $—COO—CH_2—COOC_2H_5$

stehen, fallen insbesondere die folgenden speziellen Ausführungsformen:

IIa: 5-(2,4-Dichlorphenoxy)-2-nitrobenzoesäuremethylester, bekannt aus Pesticide Manual 7th Ed. (1983), 950. The British Crop Protection Council, London;

IIb: 2,4-Dichlor-(4-nitrophenoxy)-benzol, bekannt aus Pesticide Manual 7th Ed. (1983), 8950, The British Crop Protection Council, London;

IIc: 4-(2-Chlor-4-trifluormethyl-phenoxy)-2-äthoxy-nitrobenzol, bekannt aus US—PS 4,220,468;

IId: 4-(2,4-Dichlorphenoxy)-2-methoxynitrobenzol, bekannt aus Pesticide Manual 7th Ed. (1983), 4305, The British Crop Protection Council, London;

IIe: 5-(2-Chlor-4-trifluormethyl-phenoxy)-2-nitrobenzoesäure, bekannt aus Pesticide Manual 7th Ed. (1983), 40, The British Crop Protection Council, London;

IIf: 5-(2-Chlor-4-trifluormethyl-phenoxy)-2-nitrobenzoesäure-(1-äthoxycarbonyläthyl)-ester, bekannt aus EP—A—20052;

IIg: 5-(2-Chlor-4-trifluormethyl-phenoxy)-2-nitrobenzoesäure-methylsulfonylamid, bekannt aus J. Agric. Food Chem. *25*, 1339 (1977);

IIh: 5-(2-Chlor-4-trifluormethyl-phenoxy)-acetophenonoxim-methoxycarbonylmethyläther, bekannt aus DE—OS 30 17 795; und

IIi: 5-(2-Chlor-4-trifluormethyl-phenoxy)-2-nitrobenzoesäure-äthoxy-carbonylmethyl-ester, bekannt aus EP—A—20052.

Unter die Formel III

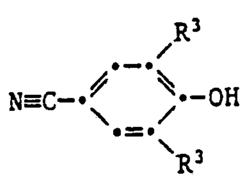

(III)

worin $R^3$ für Brom oder Jod steht, fallen folgende spezielle Ausführungsformen:

IIIa: 3,5-Dibrom-4-hydroxybenzonitril, bekannt aus Pesticide Manual 7th Ed. (1983), 1410, The British Crop Protection Council, London; und

IIIb: 3,5-Dijod-4-hydroxybenzonitril, bekannt aus Pesticide Manual 7th Ed. (1983), 7300, The British Crop Protection Council, London.

Unter die Formel IV

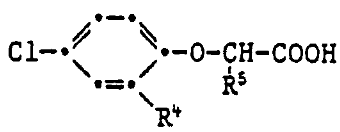

(IV)

worin $R^4$ für Chlor oder Methyl und $R^5$ für Wasserstoff oder Methyl stehen, fallen insbesondere die folgenden Einzelwirkstoffe:

IVa: 2,4-Dichlorphenoxyessigsäure, bekannt aus Pesticide Manual 7th Ed. (1983), 3780, The British Crop Protection Council, London;

IVb: 4-Chlor-2-methylphenoxyessigsäure, bekannt aus Pesticide Manual 7th Ed. (1983), 7790, The British Crop Protection Council, London;

IVc: 2-(4-Chlor-2-methylphenoxy)-propionsäure, bekannt aus Pesticide Manual 7th Ed. (1983), 7790, The British Crop Protection Council, London;

IVd: 2-(2,4-Dichlorphenoxy)-propionsäure, bekannt aus Pesticide Manual 7th Ed. (1983), 4480, The British Crop Protection Council, London.

Unter die Formel V

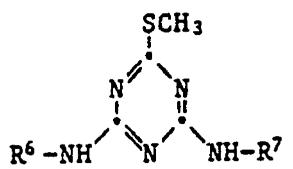

(V)

worin $R^6$ für Aethyl oder Methoxypropyl und $R^7$ für Isopropyl oder tert. Butyl stehen, fallen insbesondere folgende Ausführungsformen:

Va: 2-Aethylamino-4-tert.butylamino-6-methylthio-1,3,5-triazin, bekannt aus Pesticide Manual 7th Ed. (1983), 11330, The British Crop Protection Council, London; und

Vb: 2-Isopropylamino-4-(3-methoxypropylamino)-6-methylthio-1,3,5-triazin bekannt aus Pesticide Manual 7th Ed. (1983), 8210, The British Crop Protection Council, London.

Die Verbindungen der Formeln VIII, IX und X werden durch die anschliessenden Formeln dargestellt:

7-Chloro-3-methylchinolin-8-carbonsäure der Formel VIII

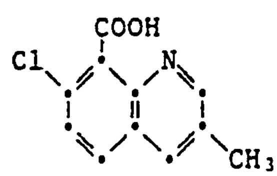

(VIII)

bekannt aus DE—OS 32 33 089;

2-[4-(2,4-Dichlorphenoxy)-phenoxy]-propionsäuremethylester der Formel IX

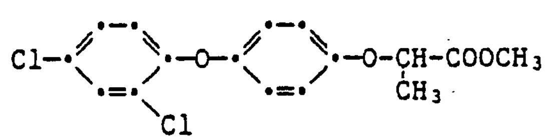

(IX)

bekannt aus Pesticide Manual 7th Ed. (1983), 4520, The British Crop Protection Council, London;

N-Benzoyl-N-(3-chlor-4-fluorphenyl)-alanin-isopropylester der Formel X

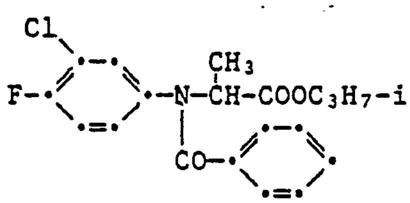

(X)

bekannt aus Pesticide Manual 7th Ed. (1983), 6380, The British Crop Protection Council, London;

Es hat sich nun überraschenderweise gezeigt, dass eine mengenmässig variable Kombination zweier Wirkstoffe, einerseits Wirkstoff I und andererseits eine Aktivsubstanz aus den Wirkstoffklassen II, III, IV, V, VIII, IX oder X eine synergistische Wirkung entfaltet, die die Mehrzahl aller wichtigen Getreideunkräuter zu bekämpfen vermag, ohne, die Getreidekultur zu schädigen. Es werden die Hauptunkräuter der Getreidekulturen, wie Arten der Monokotyledonengattungen Alopercurus, Avena und Setaria, sowie der Dikotyledonengattungen, Chrysanthemum, Galium, Sinapis, Stellaria und Veronica selektiv sowohl im Vorauflauf- als auch in Nachauflaufverfahren vernichtet.

Es wird daher gemäss der vorliegenden Erfindung ein neues synergistisches Mittel zur selektiven Unkrautbekämpfung vorgeschlagen, das als Wirkstoff einerseits N-[2-(2-Chloräthoxy)-phenyl-sulfonyl]-N'-(4-methoxy-6-methyl-1,3,5-triazin-2-yl)-harnstoff der Formel I

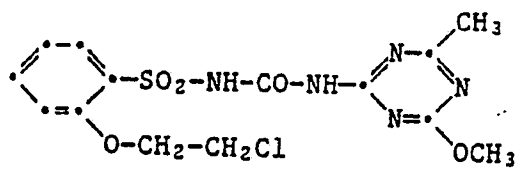

(I)

und andererseits entweder einen Wirkstoff der Formel II

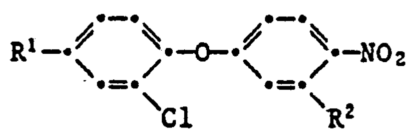

(II)

worin $R^1$ für Chlor oder Trifluormethyl und $R^2$ für Wasserstoff, $C_1$—$C_4$-Alkoxycarbonyl, $C_1$—$C_4$-Alkoxy,

$$—COONa, —COOK, —COOH, —CO—NH—SO_2CH_3, —COO—CH(CH_3)—COOC_2H_5,$$

$$—C(CH_3)=N—O—CH_2—COOCH_3 \text{ oder } —COO—CH_2—COOC_2H_5$$

stehen, oder einen Wirkstoff der Formel III

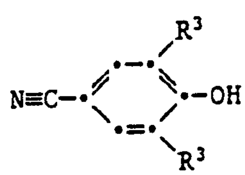

(III)

worin $R^3$ für Brom oder Jod steht, oder einen Wirkstoff der Formel IV

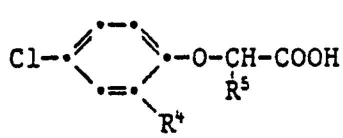

(IV)

worin $R^4$ für Chlor oder Methyl und $R^5$ für Wasserstoff oder Methyl stehen, oder einen Wirkstoff der Formel V

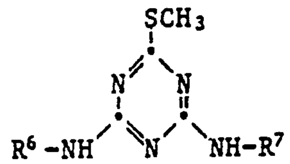

(V)

worin $R^6$ für Aethyl oder Methoxypropyl und $R^7$ für Isopropyl oder tert.Butyl stehen, oder die Verbindung der Formel VIII

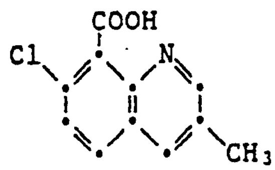

(VIII)

oder die Verbindung der Formel IX

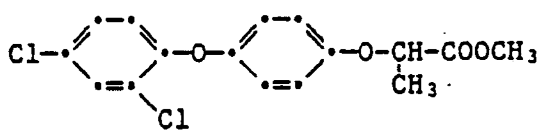

(IX)

oder die Verbindung der Formel X

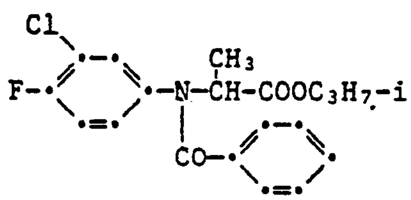

(X)

in Mischung miteinander enthält.

Es ist in hohem Masse überraschend, dass die Kombination des Wirkstoffs der Formel I mit einem Wirkstoff der Formeln II, III, IV, V, VIII, IX oder X nicht nur eine prinzipiell zu erwartende additive Ergänzung des Wirkungsspektrums auf die üblichen mit Getreide vergesellschafteten Unkräuter hervorruft, sondern dass sie einen synergistischen Effekt erzielt, der die Wirkungsgrenzen beider Präparate unter zwei Aspekten erweitert.

Einmal werden die Aufwandmengen der Einzelverbindungen I und II, III, IV, V, VIII, IX oder X bei gleichbleibend guter Wirkung deutlich gesenkt. Zum anderen erzielt die kombinierte Mischung auch dort noch einen hohen Grad der Unkraut-Bekämpfung, wo beide Einzelverbindungen in Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf Getreide zur Folge, wie sie für unbeabsnichtigte Wirkstoffüberdosierung notwendig und erwünscht ist.

Das erfindungsgemässe Mittel kann in Getreidekulturen wie Hafer, Triticale, Gerste, Roggen und inbesondere Weizen zur selektiven Unkrautbekämpfung eingesetzt werden.

Die erfindungsgemässe Wirkstoffkombination enthält einen Wirkstoff er Formel I und einen der Formeln II, III, IV, V, VIII, IX oder X in beliebigem Mischungsverhältnis, in der Regel mit einem Ueberschuss der einen über die andere Komponente. Das Mischungsverhältnis ist dabei so unkritisch, dass sowohl Ueberschüsse der Komponente er Formel I, als auch Ueberschüsse der Komponente der Formeln II, III, IV, V, VIII, IX oder X toleriert werden. Bevorzugte Mischungsverhältnisse zwischen dem Wirkstoff I und den Mischpartnern der Formeln II, III, IV, V, VIII, IX oder X liegen zwischen 1:1 und 1:2000, insbesondere zwischen 1:5 und 1:500. Die erfindungsgemässen Wirkstoffkombinationen zeigen eine ausgezeichnete Wirkung gegen Unkraüter, ohne die Getreidekulturen in den mit Vorteil angewendeten Aufwandmengen von 0,005 bis 3 kg, vorzugsweise 0,01 bis 1 kg pro Hektar, nennenswert zu beeinflussen.

Als ganz besonders wirksame synergistische Wirkstoffgemische haben sich Kombinationen der Verbindung I mit den folgenden einzelnen Wirkstoffen erweisen:

a) 5-(2,4-Dichlorphenoxy)-2-nitrobenzoesäuremethylester [Verbindung IIa];

b) 5-(2-Chlor-4-trifluormethyl-phenoxy)-2-nitrobenzoesäure-äthoxycarbonylmethyl)-ester [Verbindung IIi];

c) 3,5-Dibrom-4-hydroxybenzonitril [Verbindung IIIa];
d) 3,5-Dijod-4-hydroxybenzonitril [Verbindung IIIb];
e) 2,4-Dichlorphenoxyessigsäure [Verbindung IVa];
f) 4-Chlor-2-methylphenoxyessigsäure [Verbindung IVb];
g) 2-(4-Chlor-2-methylphenoxy)-propionsäure [Verbindung IVc];
h) 2-Aethylamino-4-tert.butylamino-6-methylthio-1,3,5-triazin [Verbindung Va];
i) 2-Isopropylamino-4-(3-methoxypropylamino)-6-methylthio-1,3,5-triazin [Verbindung Vb];
j) 7-Chloro-3-methylchinolin-8-carbonsäure [Verbindung VIII];
k) 2-[4-(2,4-Dichlorphenoxy)-phenoxy]-propionsäuremethylester [Verbindung IX]; und
l) N-Benzoyl-N-(3-chlor-4-fluorphenyl)-alanin-isopropylester [Verbindung X].

Besonders bevorzugte synergistische Kombinationspartner sind darunter die Wirkstoffe IIi, IIIa und VIII.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutylode Dioctyphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxide oder Dimethylformamid, sowie gegebenenfalls epoxidierte Pflanzenöle wie epoxidiertes Kokosnussöl oder Sojaöl: oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhalfte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene oder Cardiolipin, die man beispielsweise aus trierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtiongene, kation-und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$—$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jodoch sogenannte synthetische Tenside verwendet, insbesondere Fettsulfonate, Fettsulfate, sulfonierte Benzimidazol-derivate oder Alkylarylsulfonate.

Die Fettsulfonate oder -sulfate liegen in der Regel als Alkali-, Erdalkali- oder gegebenenfalls substitutierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2-Sulfonsäuregruppen und einen Fettsäurerest mit 8—22 C-Atomen, Alkylarylsulfonate sind. z.B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4—14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben:

"Mc Cutcheon's Detergents and Emulsifiers Annual" MC Publishing Corp., Ridgewood, New Jersey, 1981;

H. Stache, "Tensid-Taschenbuch", 2. Aufl., C. Hanser Verlag, München, Wien, 1981;

M. and J. Ash. "Encyclopedia of Surfactants", Vol. I—III, Chemical Publishing Co., New York, 1980—1981.

Die agrochemischen Zubereitungen enthalten in der Regel 0,1 bis 95%, insbesondere 0,1 bis 80%, Wirkstoffgemisch der Formeln I und II, III, IV, V, VIII, IX, und X 1 bis 99.9% eines festen oder flüssigen Zusatzstoffes und 0 bis 25%, insbesondere 0,1 bis 25% eines Tensides.

Insbesondere setzen sich bevorzugte Formulierungen folgendermassen zusammen:
(% = Gewichtsprozent)

| | | | |
|---|---|---|---|
| Emulgierbare Konzentrate | | | |
| Aktives Wirkstoffgemisch: | 1 bis 20%, | bevorzugt | 5 bis 10% |
| oberflächenaktives Mittel: | 5 bis 30%, | vorzugsweise | 10 bis 20% |
| flüssiges Trägermittel: | 50 bis 94%, | vorzugsweise | 70 bis 85% |
| Staübe | | | |
| Aktives Wirkstoffgemisch: | 0,1 bis 10%, | vorzugsweise | 0,1 bis 1% |
| festes Trägermittel: | 99,9 bis 90%, | vorzugsweise | 99,9 bis 99% |
| Suspension-Konzentrate | | | |
| Aktives Wirkstoffgemisch: | 5 bis 75%, | vorzugsweise | 10 bis 50% |
| Wasser | 94 bis 25%, | vorzugsweise | 88 bis 30% |
| oberflächenaktives Wasser: | 1 bis 40%, | vorzugsweise | 2 bis 30% |
| Benetzbare Pulver | | | |
| Aktives Wirkstoffgemisch: | 0,5 bis 90%, | vorzugsweise | 1 bis 80% |
| oberflächenaktives Mittel: | 0,5 bis 20%, | vorzugsweise | 1 bis 15% |
| festes Trägermaterial: | 5 bis 95%, | vorzugsweise | 15 bis 90% |
| Granulate | | | |
| aktives Wirkstoffgemisch: | 0,5 bis 30%, | vorzugsweise | 3 bis 15% |
| festes Trägermittel: | 99,5 bis 70%, | vorzugsweise | 97 bis 85% |

Während als Handelsware eher konzentrierte Mittel bevorzugt werden, verwendet der Endverbraucher in der Regel, verdünnte Mittel. Die Anwendungsformen können bis hinab zu 0,001% an Wirkstoff verdünnt werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln II, III, IV, V, VIII, IX oder X z.B. Insektizide, Fungizide, Bakterizide, Fungistatika, Bakteriostatika oder Nematizide zur Verbreiterung des Wirkungsspektrums enthalten.

Im Enzelnen lassen sich die erfindungsgemässen Mittel allgemein nach den folgenden Beispielen formulieren:

Formulierungsbeispiele
Beispiel F1:
Formulierungsbeispiele für synergistische Wirkstoffgemische der Formeln I und II, III, IV, V, VIII, IX oder X
(% = Gewichtsprozent)

| a) Spritzpulver | a) | b) | c) | d) |
|---|---|---|---|---|
| Wirkstoff I | 10% | 20% | 5% | 30% |
| einer der Wirkstoffe II, III, IV, V, VIII, IX, oder X | 10% | 40% | 15% | 30% |
| Na-Ligninsulfonat | 5% | 5% | 5% | 5% |
| Na-Laurylsulfat | 3% | — | 3% | — |
| Na-Diisobutylnaphthalinsulfonat | — | 6% | — | 6% |
| Octylphenolpolyäthylenglykoläther (7—8 Mol AeO) | — | 2% | — | 2% |
| Hochdisperse Kieselsäure | 5% | 27% | 5% | 27% |
| Kaolin | 67% | — | 67% | — |

Das Wirkstoffgemisch wird mit den Zusatzstoffen gut vermischt und in einer geeigneten Mühle gut vermahlen. Man erhält Spitzpulver, die sich mit Wasser zu Suspensionen jeder gewünschten Konzentration verdünnen lassen.

| b) Emulsions-Konzentrat | a) | b) | c) |
|---|---|---|---|
| Wirkstoff I | 5% | 5% | 12% |
| einer der Wirkstoffe II, III, IV, V, VIII, IX oder X | 5% | 20% | 13% |
| Octylphenolpolyäthylenglykoläther (4—5 Mol AeO) | 3% | 3% | 3% |
| Ca-Dodecylbenzolsulfonat | 3% | 3% | 2% |
| Ricinusölpolyglykoläther (36 Mol AeO) | 4% | 4% | 4% |
| Cyclohexanon | 30% | 30% | 31% |
| Xylolgemisch | 50% | 35% | 35% |

Aus diesen Konzentraten können durch Verdünnen mit Wasser Emulsionen jeder gewüschten Konzentration hergestellt werden.

| c) Stäubemittel | a) | b) | c) | d) |
|---|---|---|---|---|
| Wirkstoff I | 2% | 4% | 2% | 4% |
| einer der Wirkstoffe II, III, IV, V, VIII, IX oder X | 3% | 4% | 4% | 8% |
| Talkum | 95% | — | 94% | — |
| Kaolin | — | 92% | — | 88% |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
|---|---|---|---|
| Wirkstoff I | 5% | 3% | 5% |
| einer der Wirkstoffe II, III, IV, V, VIII, IX und X | 5% | 7% | 15% |
| Na-Ligninulfonat | 2% | 2% | 2% |
| Carboxymethylcellulose | 1% | 1% | 1% |
| Kaolin | 87% | 87% | 77% |

Das Wirkstoffgemisch wird mit den Zusatzstoffen vermischt, vermahlen und mit Wasser angefeuchtet. Dieses Gemisch wird extrudiert und anschlissend im Luftstrom getrocknet.

| e) Umhüllungs-Granulat | a) | b) |
|---|---|---|
| Wirkstoff I | 1,5% | 3% |
| einer der Wirkstoffe II, III, IV, V, VIII, IX und X | 1,5% | 5% |
| Polyäthylenglykol (MG 200) | 3% | 3% |
| Kaolin | 94% | 89% |

Das fein gemahlene Wirkstoffgemisch wird in einem Mischer auf das mit Polyäthylenglykol angefeuchtet Kaolin gleichmässig aufgetragen. Auf diese Weise erhält man staubfreie Umhüllungs-Granulate.

| f) Suspensions-Konzentrat | a) | b) |
|---|---|---|
| Wirkstoff I | 20% | 20% |
| einer der Wirkstoffe II, III, IV, V, VIII, IX und X | 20% | 40% |
| Aethylenglykol | 10% | 10% |
| Nonylphenolpolyäthylenglykoläther (15 Mol AeO) | 6% | 6% |
| Na-Ligninsulfonat | 10% | 10% |
| Carboxymethylcellulose | 1% | 1% |
| 37 %ige wässrige Formaldehyd-Lösung | 0,2% | 0,2% |
| Silikonöl in Form einer 75 %igen wässrigen Emulsion | 0,8% | 0,8% |
| Wasser | 32% | 12% |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und II, III, IV, V, VIII, IX und X grösser ist als die erwartbare gemeinsame Wirkung der einzeln applizierten Wirkstoffe.

Die zu erwartende herbizide Wirkung E für eine gegebene Kombination zweier Herbizide kann (vgl. COLBY, S. R., "Calculating synergistic and antagonistic response of herbicide combinations", Weeds 15, Seiten 20—22, 1967) wie folgt berechnet werden:

$$E = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0%).

Y = Prozent Wachstumshemmung bei Behandlung mit einem Herbizid II, III, IV, V, VIII, IX oder X mit q kg Aufwandmenge pro Hektar im Vergleich zur unbehandelten Kontrolle

E = Erwartete herbizide Wirkung (Prozent Wachstumshemmung im Vergleich zur unbehandelten Kontrolle) nach Behandlung mit Herbizidgemisch I und II, III, IV, V, VIII, IX oder X bei einer Aufwandmenge von p + q kg Wirkstoffmenge pro Hektar.

Ist die tatsächlich beobachtete Wirkung grösser als der zu erwartende Wert E, so liegt Synergismus vor.

Der synergistische Effekt der Kombinationen der Wirkstoffe I und II, III, IV, V, VIII, IX oder X wird in den folgenden Beispielen demonstriert.

Biologische Beispiele:

Beispiel B1: Preemergenter Versuch

Die Testpflanzensamen werden in Plastiktöpfe, die 0,5 1 sterilisierte Ackererde enthalten, im Gewächshaus angesät. Einen Tag nach der Saat wird die Erdoberfläche mit einer wässrigen Dispersion der Wirkstoffkombination besprüht.

Die Aufwandmenge an Wirksubstanz wird durch geeignete Vedünnung des Konzentrats eingestellt. Man versprüht jeweils 50 ml Dispersion pro $m^2$. Die Testpflanzen werden im Gewächshaus bei Tagestemperaturen von 18—22°C und Nachttemperaturen von 10—11°C, einer rel. Luftfeuchtigkeit von 60—70% und täglicher Bewässerung weiterkultiviert. 2 bis 4 Wochen nach Saat und Applikation erfolgt die Auswertung. Registriert wird die prozentuale Wachstumshemmung im Vergleich zur unbehandelten Kontrolle. Als Massstab gilt folgende lineare Skala:

100% = Pflanzen abgestorben
50% = mittlere Wirkung
0% = wie unbehandelte Kontrolle

Die Versuchsergebnisse sind zusammen mit dem nach der oben zitierten Colby-Formel berechneten Erwartungswerten in den Tabellen der Abschnitte a, b, c, d, e, f und g eingetragen. Angegeben sind die jeweils angewendeten Aufwandmengen an Wirkstoffen sowie die geprüften Kultur-und Unkrautpflanzen. Jeder der Abschnitte a, b, c, d, e, f und g enthält drei Tabellen. Die ersten beiden Tabellen zeigen die Ergebnisse der Einzelwirkstoffe, die dritte Tabelle representiert die berechneten Erwartungswerte gemäss Colby in Gegenüberstellung mit den experimentell ermittelten Werten.

a) preemergente Aktivität von Gemischen I mit IIa.

Evaluierung: 22 Tage nach Applikation in Prozent Wachstumshemmung im Vergleich zur unbehandelten Kontrolle.

| Verbindung I g AS/ha | 15 | 8 | 4 | 2 | 1 | 0.5 |
|---|---|---|---|---|---|---|
| Weizen "Probus" | 0 | 0 | 0 | 0 | 0 | 0 |
| Stellaria media | 98 | 95 | 90 | 85 | 30 | 10 |
| Sinapis alba | 90 | 80 | 30 | 15 | 0 | 0 |

| Verbindung IIa | 1000 | 500 | 250 | 120 | 60 |
|---|---|---|---|---|---|
| Weizen "Probus" | 0 | 0 | 0 | 0 | 0 |
| Stellaria media | 0 | 0 | 0 | 0 | 0 |
| Sinapis alba | 0 | 0 | 0 | 0 | 0 |

| Aufwandmengen g AS/ha Verbindung I | Verbindung IIa | Stellaria media gefundene Wirkung | Stellaria media Erwartungswert | Sinapis alba gefundene Wirkung | Sinapis alba Erwartungswert |
|---|---|---|---|---|---|
| 15 | 1000 | 100 | 98 | 95 | 90 |
| 8 | 1000 | 100 | 95 | 90 | 80 |
| 4 | 1000 | 95 | 90 | 75 | 30 |
| 2 | 1000 | 85 | 85 | 30 | 15 |
| 1 | 1000 | 50 | 30 | 30 | 0 |
| 0.5 | 1000 | 40 | 10 | 0 | 0 |
| 15 | 500 | 100 | 98 | 95 | 90 |
| 8 | 500 | 98 | 95 | 85 | 80 |
| 4 | 500 | 90 | 90 | 60 | 30 |
| 2 | 500 | 85 | 85 | 30 | 15 |
| 1 | 500 | 50 | 30 | 10 | 0 |
| 0.5 | 500 | 30 | 10 | 0 | 0 |
| 15 | 250 | 100 | 98 | 95 | 90 |
| 8 | 250 | 100 | 95 | 90 | 80 |
| 4 | 250 | 95 | 90 | 85 | 30 |
| 2 | 250 | 80 | 85 | 30 | 15 |
| 1 | 250 | 80 | 30 | 0 | 0 |
| 0.5 | 250 | 20 | 10 | 0 | 0 |
| 15 | 120 | 100 | 98 | 95 | 90 |
| 8 | 120 | 100 | 95 | 90 | 80 |
| 4 | 120 | 95 | 90 | 70 | 30 |
| 2 | 120 | 90 | 85 | 40 | 15 |
| 1 | 120 | 70 | 30 | 10 | 0 |
| 0.5 | 120 | 10 | 10 | 0 | 0 |
| 15 | 60 | 100 | 98 | 95 | 90 |
| 8 | 60 | 100 | 95 | 90 | 80 |
| 4 | 60 | 95 | 90 | 75 | 30 |
| 2 | 60 | 80 | 85 | 40 | 15 |
| 1 | 60 | 50 | 30 | 10 | 0 |
| 0.5 | 60 | 20 | 10 | 0 | 0 |

b) preemergente Aktivität von Gemischen I und IVa.

Evaluierung: 22 Tage nach Applikation in Prozent Wachstumshemmung im Vergleich zur unbehandelten Kontrolle.

| Verbindung I g AS/ha | 15 | 8 | 4 | 2 | 1 | 0.5 |
|---|---|---|---|---|---|---|
| Weizen "Probus" | 0 | 0 | 0 | 0 | 0 | 0 |
| Stellaria media | 98 | 95 | 90 | 85 | 30 | 10 |
| Sinapis alba | 90 | 80 | 30 | 15 | 0 | 0 |

| Verbindung IVa | 60 | 30 | 15 |
|---|---|---|---|
| Weizen "Probus" | 0 | 0 | 0 |
| Stellaria media | 0 | 0 | 0 |
| Sinapis alba | 0 | 0 | 0 |

| Aufwandmengen g AS/ha | | Stellaria media | | Sinapis alba | |
|---|---|---|---|---|---|
| Verbindung I | Verbindung IVa | gefundene Wirkung | Erwartungswert | gefundene Wirkung | Erwartungswert |
| 8 | 60 | 98 | 95 | 80 | 80 |
| 4 | 60 | 95 | 90 | 50 | 30 |
| 2 | 60 | 85 | 85 | 20 | 15 |
| 1 | 60 | 60 | 30 | 0 | 0 |
| 0.5 | 60 | 30 | 10 | 0 | 0 |
| 8 | 30 | 98 | 95 | 80 | 80 |
| 4 | 30 | 95 | 90 | 75 | 30 |
| 2 | 30 | 90 | 85 | 30 | 15 |
| 1 | 30 | 60 | 30 | 30 | 0 |
| 0.5 | 30 | 30 | 10 | 0 | 0 |
| 8 | 15 | 98 | 95 | 90 | 80 |
| 4 | 15 | 95 | 90 | 70 | 30 |
| 2 | 15 | 85 | 85 | 30 | 15 |
| 1 | 15 | 30 | 30 | 0 | 0 |
| 0.5 | 15 | 10 | 10 | 0 | 0 |

c) preemergente Aktivität von Gemischen I mit IVb.

Evaluierung: 17 Tage nach Applikation im Vergleich zur unbehandelten Kontrolle.

| Verbindung I g AS/ha | 15 | 8 |
|---|---|---|
| Weizen "Probus" | 0 | 0 |
| Avena fatua | 20 | 5 |

| Verbindung IVb g AS/ha | 500 | 250 | 60 | 15 |
|---|---|---|---|---|
| Weizen "Probus" | 0 | 0 | 0 | 0 |
| Avena fatua | 20 | 20 | 10 | 0 |

| | | | | | |
|---|---|---|---|---|---|
| Verbindung I g AS/ha | | 15 | 15 | 15 | 15 |
| Verbindung IVb g AS/ha | | 500 | 250 | 60 | 15 |
| Avena fatua | gefundene Wirkung | 50 | 40 | 50 | 50 |
| | Erwartungswert | 36 | 36 | 50 | 20 |

d) preemergente Aktivität von Gemischen I mit Va.

Evaluierung: 21 Tage nach Applikation im Vergleich zur unbehandelten Kontrolle.

| Verbindung I g AS/ha | 2 | 1 | 0.5 |
|---|---|---|---|
| Weizen "Probus" | 0 | 0 | 0 |
| Veronica persicaria | 50 | 20 | 0 |

| Verbindung Va g As/ha | 100 | 50 |
|---|---|---|
| Weizen "Probus" | 0 | 0 |
| Veronica persicaria | 30 | 10 |

| | | | | | | |
|---|---|---|---|---|---|---|
| Verbindung I g AS/ha | | 2 | 1 | 0.5 | 2 | 1 |
| Verbindung Va g AS/ha | | 100 | 100 | 100 | 50 | 50 |
| Veronica persicaria | gefundene Wirkung | 80 | 80 | 75 | 70 | 70 |
| | Erwartungswert | 65 | 44 | 30 | 55 | 28 |

e) preemergente Aktivität von Gemischen I mit Vb.

Evaluierung: 21 Tage nach Applikation im Vergleich zur unbehandelten Kontrolle.

| Verbindung I g AS/ha | 15 | 8 | 4 | 2 | 1 |
|---|---|---|---|---|---|
| Weizen "Probus" | 0 | 0 | 0 | 0 | 0 |
| Lolium perenne | 70 | 60 | 20 | 0 | 0 |

| Verbindung Vb g AS/ha | 800 | 400 | 200 |
|---|---|---|---|
| Weizen "Probus" | 20 | 10 | 0 |
| Lolium perenne | 20 | 10 | 0 |

| Verbindung I g AS/ha | | 15 | 8 | 4 | 2 | 1 | 4 | 2 | 1 | 4 | 2 |
|---|---|---|---|---|---|---|---|---|---|---|---|
| Verbindung Va g AS/ha | | 800 | 800 | 800 | 800 | 800 | 400 | 400 | 400 | 200 | 200 |
| Lolium perenne | gef. Wirkung | 85 | 80 | 70 | 50 | 50 | 60 | 40 | 30 | 40 | 10 |
| | Erwartungswert | 76 | 68 | 36 | 20 | 20 | 28 | 10 | 10 | 20 | 0 |

f) preemergente Aktivität von Gemischen I mit VIII.

Evaluierung: 17 Tage nach Applikation im Vergleich zur unbehandelten Kontrolle.

| Verbindung I g AS/ha | 15 | 8 | 4 | 2 | 1 |
|---|---|---|---|---|---|
| Weizen "Probus" | 0 | 0 | 0 | 0 | 0 |
| Setaria glauca | 85 | 80 | 70 | 20 | 10 |

| Verbindung Vb g AS/ha | 1000 |
|---|---|
| Weizen "Probus" | 0 |
| Setaria glauca | 50 |

| Verbindung I g AS/ha | | 15 | 8 | 4 | 2 | 1 |
|---|---|---|---|---|---|---|
| Verbindung VIII g AS/ha | | 1000 | 1000 | 1000 | 1000 | 1000 |
| Setaria glauca | gef. Wirkung | 85 | 85 | 70 | 50 | 30 |
| | Erwartungswert | 78 | 64 | 55 | 19 | 10 |

g) preemergente Aktivität von Gemischen I mit IX.

Evaluierung: 22 Tage nach Applikation im Vergleich zur unbehandelten Kontrolle

| Verbindung I g AS/ha | 15 | 8 | 4 | 1 | 0.5 |
|---|---|---|---|---|---|
| Weizen "Probus" | 0 | 0 | 0 | 0 | 0 |
| Stellaria media | 98 | 95 | 90 | 30 | 10 |
| Sinapis alba | 90 | 80 | 30 | 0 | 0 |

| Verbindung IX g AS/ha | 250 | 120 | 60 |
|---|---|---|---|
| Weizen "Probus" | 0 | 0 | 0 |
| Stellaria media | 0 | 0 | 0 |
| Sinapis alba | 0 | 0 | 0 |

| Aufwandmengen g AS/ha | | Stellaria media | | Sinapis alba | |
|---|---|---|---|---|---|
| Verbindung I | Verbindung IX | gefundene Wirkung | Erwartungswert | gefundene Wirkung | Erwartungswert |
| 15 | 250 | 100 | 98 | 95 | 90 |
| 8 | 250 | 98 | 95 | 85 | 80 |
| 4 | 250 | 95 | 90 | 60 | 30 |
| 1 | 250 | 50 | 30 | 0 | 0 |
| 0.5 | 250 | 50 | 10 | 0 | 0 |
| 15 | 120 | 100 | 98 | 95 | 90 |
| 8 | 120 | 100 | 95 | 85 | 80 |
| 4 | 120 | 95 | 90 | 40 | 30 |
| 1 | 120 | 60 | 30 | 0 | 0 |
| 0.5 | 120 | 30 | 10 | 0 | 0 |
| 15 | 60 | 100 | 98 | 95 | 90 |
| 8 | 60 | 98 | 95 | 90 | 80 |
| 4 | 60 | 98 | 90 | 70 | 30 |
| 1 | 60 | 60 | 60 | 0 | 0 |
| 0.5 | 60 | 30 | 30 | 0 | 0 |

Beispiel B2:
Postemergenter Versuch

Die Testpflanzen werden in Plastiktöpfen, die 0,5 1 sterilisierte Ackererde enthalten, angezogen. Nach dem Auflaufen werden die Pflanzen im 2—3 Blattstadium (ca. 2 Wochen nach der Saat) mit einer wässrigen Dispersion der Wirkstoffkombinationen besprüht. Die Spritzbrühemenge beträgt 50 ml pro $m^2$. Die Aufwandmenge an Wirksubstanzen wird durch geeignete Verdünnung des Konzentrats eingestellt. Die Testpflanzen werden im Gewächshaus bei Tagestemperaturen von 18—22°C und Nachttemperaturen von 10—12°C, einer rel. Luftfeuchtigkeit von 60—70% und täglicher Bewässerung weiterkultiviert. 2 bis 4 Wochen nach der Applikation erfolgt die Auswertung. Der Schädigungsgrad der Pflanzen wird prozentual nach gleichem Massstab wie im preemergenten Versuch bewertet.

Die Versuchsergebnisse sind zusammen mit den nach der oben ziterten Colby-Formel berechneten Erwartungswerten in den folgenden Tabellen a, b, c, d, e und f eingetragen. Angegeben sind jeweils die angewendeten Aufwandmengen an Wirkstoffen sowie die geprüften Kultur- und Unkrautpflanzen. Auch hier enthält jeder der Abschnitte a, b, c, d, e und f drei Tabellen. Die ersten beiden Tabellen zeigen die Wirkung der Einzelwirkstoffe, die dritte Tabelle representiert die berechneten Erwartungswerte gemäss Colby in Gegenüberstellung mit den experimentell ermittelten Werten.

| Verbindung I g AS/ha | 15 | 8 | 4 | 2 | 1 |
|---|---|---|---|---|---|
| Weizen "Probus" | 5 | 0 | 0 | 0 | 0 |
| Stellaria media | 80 | 70 | 50 | 50 | 40 |
| Sinapis alba | 85 | 80 | 70 | 70 | 60 |
| Veronica persicaria | 70 | 20 | 10 | 0 | 0 |

| Verbindung IIIa g AS/ha | 250 | 120 |
|---|---|---|
| Weizen "Probus" | 0 | 0 |
| Stellaria media | 10 | 0 |
| Sinapis alba | 85 | 85 |
| Veronica persicaria | 30 | 30 |

| Aufwandmengen g AS/ha | | Weizen "Probus | | Stellaria media | | Sinapis alba | | Veronica pers. | |
|---|---|---|---|---|---|---|---|---|---|
| Verbindung I | Verbindung IIIa | gefundene Wirkung | Erwartungswert | gefundene Wirkung | Erwartungswert | gefundene Wirkung | Erwartungswert | gefundene Wirkung | Erwartungswert |
| 15 | 250 | 0 | 5 | 85 | 82 | 100 | 98 | 85 | 79 |
| 8 | 250 | 0 | 0 | 85 | 73 | 100 | 97 | 85 | 44 |
| 4 | 250 | 0 | 0 | 85 | 55 | 100 | 96 | 70 | 37 |
| 2 | 250 | 0 | 0 | 85 | 55 | 100 | 96 | 70 | 30 |
| 1 | 250 | 0 | 0 | 85 | 46 | 98 | 94 | 65 | 30 |
| 15 | 120 | 0 | 5 | 80 | 80 | 98 | 98 | 90 | 79 |
| 8 | 120 | 0 | 0 | 80 | 70 | 98 | 97 | 80 | 44 |
| 4 | 120 | 0 | 0 | 80 | 50 | 98 | 96 | 50 | 37 |
| 2 | 120 | 0 | 0 | 80 | 50 | 98 | 96 | 50 | 30 |
| 1 | 120 | 0 | 0 | 80 | 40 | 98 | 94 | 40 | 30 |

b) postemergente Aktivität von Gemischen I mit IIIb

Evaluierung: 25 Tage nach Applikation im Vergleich zur unbehandelten Kontrolle.

| Verbindung I g AS/ha | 15 | 8 | 4 | 2 | 1 |
|---|---|---|---|---|---|
| Weizen "Probus" | 0 | 0 | 0 | 0 | 0 |
| Veronica persicaria | 70 | 20 | 10 | 0 | 0 |

| Verbindung IIIb g AS/ha | 250 | 60 |
|---|---|---|
| Weizen "Probus" | 0 | 0 |
| Veronica persicaria | 30 | 0 |

| Aufwandmengen g AS/ha | | Veronica persicaria | |
|---|---|---|---|
| Verbindung I | Verbindung IIIb | gefundene Wirkung | Erwartungswert |
| 15 | 250 | 85 | 79 |
| 8 | 250 | 85 | 44 |
| 4 | 250 | 85 | 37 |
| 2 | 250 | 50 | 30 |
| 1 | 250 | 50 | 30 |
| 15 | 60 | 90 | 70 |
| 8 | 60 | 85 | 20 |
| 4 | 60 | 80 | 10 |

c) postemergente Aktivität von Gemischen I mit Va

Evaluierung: 17 Tage nach Applikation im Vergleich zur unbehandelten Kontrolle.

| Verbindung I g AS/ha | 8 | 4 | 2 | 1 | 0.5 |
|---|---|---|---|---|---|
| Weizen "Probus" | 0 | 0 | 0 | 0 | 0 |
| Lolium perenne | 50 | 20 | 10 | 5 | 0 |

| Verbindung Va g AS/ha | 400 | 200 |
|---|---|---|
| Weizen "Probus" | 10 | 10 |
| Lolium perenne | 50 | 10 |

| Aufwandmengen g AS/ha Verbindung I | Verbindung Va | Weizen "Probus" gefundene Wirkung | Erwartungswert | Lolium perenne gefundene Wirkung | Erwartungswert |
|---|---|---|---|---|---|
| 8 | 400 | 10 | 10 | 75 | 75 |
| 4 | 400 | 10 | 10 | 70 | 60 |
| 2 | 400 | 10 | 10 | 70 | 55 |
| 1 | 400 | 10 | 10 | 70 | 53 |
| 0.5 | 400 | 10 | 10 | 60 | 50 |
| 4 | 200 | 10 | 10 | 40 | 28 |
| 2 | 200 | 10 | 10 | 40 | 19 |
| 1 | 200 | 10 | 10 | 40 | 15 |
| 0.5 | 200 | 10 | 10 | 40 | 10 |

d) postemergente Aktivität von Gemischen I mit Vb

Evaluierung: 17 Tage nach Applikation im Vergleich zur unbehandelten Kontrolle.

| Verbindung I g AS/ha | 15 | 8 | 4 | 2 | 1 |
|---|---|---|---|---|---|
| Weizen "Probus" | 10 | 0 | 0 | 0 | 0 |
| Lolium perenne | 70 | 50 | 20 | 10 | 5 |
| Setaria glauca | 50 | 20 | 10 | 0 | 0 |
| Avena fatua | 30 | 10 | 0 | 0 | 0 |

| Verbindung Vb g AS/ha | 400 |
|---|---|
| Weizen "Probus" | 30 |
| Lolium perenne | 10 |
| Setaria glauca | 20 |
| Avena fatua | 80 |

| Verbindung I g AS/ha | | 15 | 8 | 4 | 2 | 1 |
|---|---|---|---|---|---|---|
| Verbindung Vb g AS/ha | | 400 | 400 | 400 | 400 | 400 |
| Weizen "Probus" | gef. Wirkung | 30 | 20 | 25 | 30 | 30 |
| | Erwartungswert | 37 | 30 | 30 | 30 | 30 |
| Lolium perenne | gef. Wirkung | 80 | 70 | 70 | 70 | 40 |
| | Erwartungswert | 73 | 55 | 28 | 19 | 15 |
| Setaria glauca | gef. Wirkung | 80 | 70 | 80 | 40 | 30 |
| | Erwartungswert | 60 | 36 | 28 | 20 | 20 |
| Avena fatua | gef. Wirkung | 98 | 98 | 98 | 98 | 98 |
| | Erwartungswert | 86 | 82 | 80 | 80 | 80 |

e) postemergente Aktivität von Gemischen I mit VIII

Evaluierung: 14 Tage nach Applikation im Vergleich zur unbehandelten Kontrolle.

| Verbindung I<br>g AS/ha | 8 | 4 | 2 | 1 |
|---|---|---|---|---|
| Weizen "Probus"<br>Stellaria media | 0<br>85 | 0<br>80 | 0<br>70 | 0<br>60 |

| Verbindung VIII<br>g AS/ha | 1000 | 500 | 250 |
|---|---|---|---|
| Weizen "Probus"<br>Stellaria media | 0<br>10 | 0<br>0 | 0<br>0 |

| Aufwandmengen g AS/ha Verbindung I | Verbindung IIIb | Stellaria media gefundene Wirkung | Erwartungswert |
|---|---|---|---|
| 8 | 1000 | 90 | 87 |
| 4 | 1000 | 90 | 82 |
| 2 | 1000 | 90 | 73 |
| 1 | 1000 | 70 | 64 |
| 8 | 500 | 90 | 85 |
| 4 | 500 | 85 | 80 |
| 2 | 250 | 75 | 70 |
| 1 | 250 | 65 | 60 |

f) postemergente Aktivität von Gemischen I mit X

Evaluierung: 14 Tage nach Applikation im Vergleich zur unbehandelten Kontrolle.

| Verbindung I g AS/ha | 15 | 8 |
|---|---|---|
| Weizen "Probus" | 5 | 0 |
| Lolium perenne | 60 | 15 |

| Verbindung X g AS/ha | 2000 | 1000 | 500 |
|---|---|---|---|
| Weizen "Probus" | 10 | 0 | 0 |
| Lolium perenne | 0 | 0 | 0 |

| Aufwandmengen g AS/ha | | Weizen "Probus" | | Lolium perenne | |
|---|---|---|---|---|---|
| Verbindung I | Verbindung X | gefundene Wirkung | Erwartungswert | gefundene Wirkung | Erwartungswert |
| 15 | 2000 | 10 | 15 | 80 | 60 |
| 8 | 2000 | 10 | 10 | 60 | 15 |
| 15 | 1000 | 10 | 0 | 80 | 60 |
| 8 | 1000 | 5 | 0 | 40 | 15 |
| 15 | 500 | 10 | 5 | 80 | 60 |
| 8 | 500 | 0 | 0 | 50 | 15 |

**Patentansprüche**

1. Synergistisches Mittel zur selektiven Unkrautbekämpfung in Getreide, dadurch gekennzeichnet, dass es neben Träger- und/oder anderen Zuschlagstoffen als wirksame Komponente einerseits N-[2-(2-Chloräthoxy)-phenylsulfonyl]-N'-(4-methoxy-6-methyl-1,3,5-triazin-2-yl)-harnstoff der Formel I

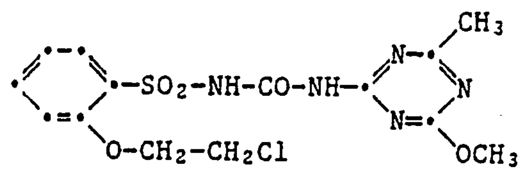

(I)

un andererseits entweder einen Wirkstoff der Formel II

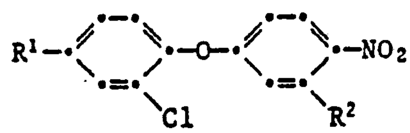

(II)

worin $R^1$ für Chlor oder Trifluormethyl und $R^2$ für Wasserstoff, $C_1$—$C_4$-Alkoxycarbonyl, $C_1$—$C_4$-Alkoxy,

$—COONa$, $—COOK$, $—COOH$, $—CO—NH—SO_2CH_3$, $—CO—CH(CH_3)—COOC_2H_5$,

$—C(CH_3)=N—O—CH_2—COOCH_3$ oder $—COO—CH_2—COOC_2H_5$

stehen, oder einen Wirkstoff der Formel III

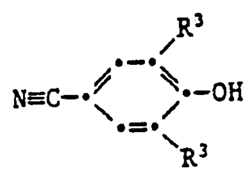

(III)

worin $R^3$ für Brom oder Jod steht, oder einen Wirkstoff der Formel IV

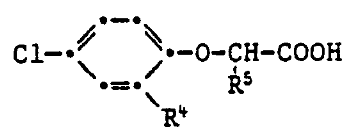

(IV)

worin $R^4$ für Chlor oder Methyl und $R^5$ für Wasserstoff oder methyl stehen, oder einen Wirkstoff der Formel V

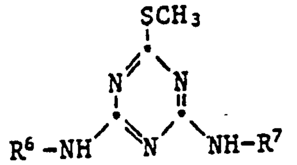

(V)

worin $R^6$ für Aethyl oder Methoxypropyl und $R^7$ für Isopropyl oder tert.Butyl stehen, oder die Verbindung der Formel VIII

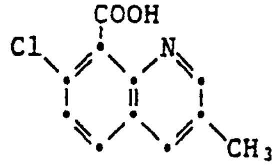

(VIII)

oder die Verbindung der Formel IX

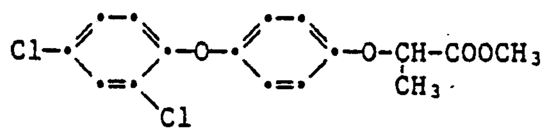

(IX)

oder die Verbindung der Formel X

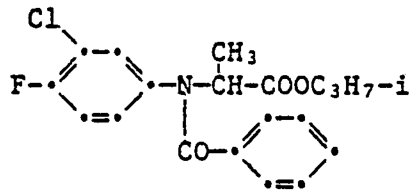

(X)

in Mischung miteinander enthält.

2. Mittel gemäss Anspruch 1, dadurch gekennzeichnet, dass es neben der Komponente der Formel I als Mischungspartner entweder

5-(2,4-Dichlorphenoxy)-2-nitrobenzoesäuremethylester oder
5-(2-Chlor-4-trifluormethyl-phenoxy)-2-nitrobenzoesäure-äthoxycarbonylmethyl)-ester oder
3,5-Dibrom-4-hydroxybenzonitril oder
3,5-Dijod-4-hydroxybenzonitril oder
2,4-Dichlorphenoxyessigsäure oder
4-Chlor-2-methylphenoxyessigsäure oder
2-(4-Chlor-2-methylphenoxy)-propionsäure oder
2-Aethylamino-4-tert.butylamino-6-methylthio-1,3,5-triazin oder
2-Isopropylamino-4-(3-methoxypropylamino)-6-methylthio-1,3,5-triazin oder
7-Chlor-3-methylchinolin-8-carbonsäure oder
2-[4-(2,4-Dichlorphenoxy)-phenoxy]-propionsäuremethylester oder
N-Benzoyl-N-(3-chlor-4-fluorphenyl)-alanin-isopropylester enthält.

3. Mittel gemäss Anspruch 1, dadurch gekennzeichnet, dass es neben der Verbindung der Formel I als Mischungspartner 5-(2-Chlor-4-trifluormethyl-phenoxy)-2-nitrobenzoesäure-äthoxycarbonylmethyl-ester enthält.

4. Mittel gemäss Anspruch 1, dadurch gekennzeichnet, dass es neben der Verbindung der Formel I als Mischungspartner 3,5-Dibrom-4-hydroxybenzonitril enthält.

5. Mittel gemäss Anspruch 1, dadurch gekennzeichnet, dass es neben der Verbindung der Formel I als Mischungspartner 7-Chlor-3-methylchinolin-8-carbonsäure enthält.

6. Mittel gemäss Anspruch 1, dadurch gekennzeichnet, dass im genannten Mittel die Komponente I gegenüber der zweiten Komponente der Formeln II, III, IV, V, VIII, IX oder X in einem Gewichtsverhältnis zwischen 1:1 und 1:2000 vorhanden ist.

7. Mittel gemäss Anspruch 6, dadurch gekennzeichnet, dass das Gewichtsverhältnis zwischen Komponente der Formeln II, III, IV, V, VIII, IX oder X 1:5 und 1:500 beträgt.

8. Verfahren zur selektiven Unkrautbekämpfung in Getreide, dadurch gekennziechnet, dass man verunkrautete Getreidekulturen pre- oder postemergent mit einer wirksamen Menge eines Mittels gemäss Anspruch 1 behandelt.

9. Verfahren gemäss Anspruch 8, dadurch gekennzeichnet, dass man Getreidekulturen, welche als Unkraüter Monokotyledonen der Gattungen Avena, Lolium oder Setaria und Dikotylendonen der Gattungen Sinapis, Stellaria oder Veronica enthalten, mit dem genannten Mittel behandelt.

10. Verfahren gemäss Anspruch 8, dadurch gekennzeichnet, dass man die Getreidekultur mit dem genannten Mittel in Aufwandmengen behandelt, die 0,005 bis 3 kg, vorzugsweise 0,01 bis 1 kg Totalwirkstoffe pro Hektar entsprechen.

11. Verwendung einer wirksamen Menge eines Mittels gemäss Anspruch 1 zur pre- und postemergenten selektiven Unkrautbekämpfung in Getreidekulturen.

**Revendications**

1. Produit synergétique pour la lutte sélective contre les végétaux adventices dans les cultures de céréales, caractérisé en ce qu'il contient en tant que composants actifs, avec des véhicules et/ou d'autres additifs, d'une part la N-[2-(2-chloréthoxy)-phénylsulfonyl]-N'-(4-méthoxy-6-méthyl-1,3,5-triazine-2-yl)-urée formule I

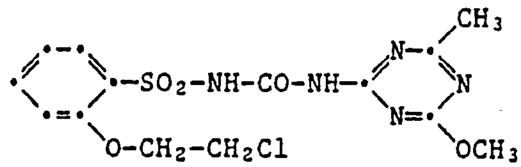

(I)

et d'autre part, une substance active de formule II

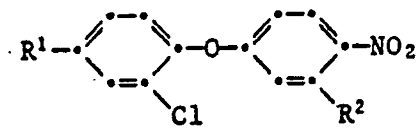

(II)

dans laquelle $R^1$ représente le chlore ou un groupe trifluorométhyle et $R^2$ représente l'hydrogène, un groupe (alcoxy én $C_1$—$C_4$)-carbonyle, alcoxy en $C_1$—$C_4$, —COONa, —COOK, —COOH, —CO—NH—$SO_2CH_3$, —COO—CH($CH_3$)—$COOC_2H_5$, —C($CH_3$)=N—O—$CH_2$—$COOCH_3$ ou —COO—$CH_2$—$COOC_2H_5$, ou bien une substance active de formule III

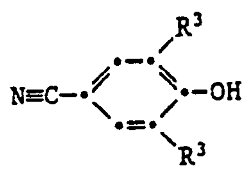

(III)

dans laquelle $R^3$ représente le brome ou l'iode, ou une substance active de formule IV

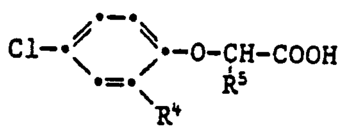

(IV)

dans laquelle $R^4$ représente le chlore ou un groupe méthyle et $R^5$ l'hydrogène ou un groupe méthyle, ou bien une substance active de formule V

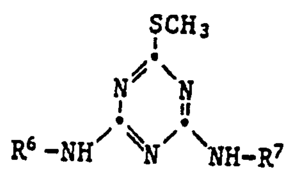

(V)

dans laquelle $R^6$ représente un groupe éthyle ou méthoxypropyle et $R^7$ un groupe isopropyle ou tert-butyle, ou bien le composé de formule VIII

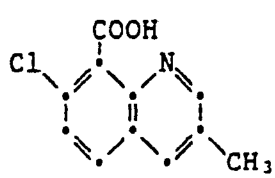

(VIII)

ou bien le composé de formule IX

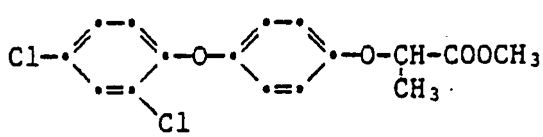

(IX)

ou bien le composé de formule X

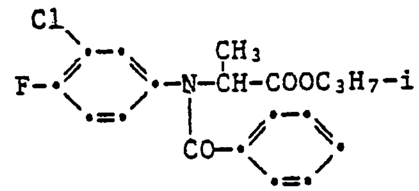

(X)

en mélange entre eux.

2. Produit selon la revendication 1, caractérisé en ce qu'il contient en mélange avec le composant de formule I:

le 5-(2,4-dichlorophénoxy)-2-nitrobenzoate de méthyle, ou bien
le 5-(2-chloro-4-trifluorométhyl-phénoxy)-2-nitrobenzoate d'éthoxycarbonylméthyle, ou bien
le 3,5-dibromo-4-hydroxybenzonitrile, ou bien
le 3,5-diiodo-4-hydroxybenzonitrile, ou bien
l'acide 2,4-dichlorophénoxyacétique, ou bien
l'acide 4-chloro-2-méthylphénoxyacétique, ou bien
l'acide 2-(4-chloro-2-méthylphénoxy)-propionique, ou bien
la 2-éthylamino-4-tert-butylamino-6-méthylthio-1,3,5-triazine, ou bien
la 2-isopropylamino-4-(3-méthoxypropylamino)-6-méthylthio-1,3,5-triazine, ou bien
l'acide 7-chloro-3-méthylquinoléine-8-carboxylique, ou bien
le 2-[4-(2,4-dichlorophénoxy)-phénoxy]-propionate de méthyle, ou bien
l'ester isopropylique de la N-benzoyl-N-(3-chloro-4-fluorophényl)-alanine.

3. Produit selon la revendication 1, caractérisé en ce qu'il contient, en mélange avec le composé de formule I, le 5-(2-chloro-4-trifluorométhyl-phénoxy)-2-nitrobenzoate d'éthoxycarbonylméthyle.

4. Produit selon la revendication 1, caractérisé en ce qu'il contient, en mélange avec le composé de formule I, le 3,5-dibromo-4-hydroxybenzonitrile.

5. Produit selon la revendication 1, caractérisé en ce qu'il contient, en mélange avec le composé de formule I, l'acide 7-chloro-3-méthyquinoléine-8-carboxylique.

6. Produit selon la revendication 1, caractérisé en ce que le composant I et le duexième composant de formule II, III, IV, V, VIII, IX ou X sont présents dans des proportions relatives en poids de 1:1 à 1:2000.

7. Produit selon la revendication 6, caractérisé en ce le composant I et le composant de formule II, III, IV, V, VIII, IX ou X sont présents dans des proportions relatives en poids de 1:5 à 1:500.

8. Procédé pour combattre sélectivement les végétaux adventices dans les cultures de céréales, caractérisé en ce que l'on traite les cultures de céréales infestées en pré- ou post-levée par une quantité efficace d'un produit selon la revendication 1.

9. Procédé selon la revendication 8, caractérisé en ce que l'on traite par le produit en question des cultures de céréales contenant en tant que végétaux adventices des monocotylédones des genres Avena, Lolium ou Setaria et des dicotylédones des genres Sinapis, Stellaria ou Veronica.

10. Procédé selon la revendication 8, caractérisé en ce que l'on traite par la culture de céréales par le produit en question à des doses d'application de 0,005 à 3 kg, de préférence de 0,01 à 1 kg de substances actives totales par ha.

11. L'utilisation d'une quantité efficace d'un produit selon la revendication 1 pour la lutte sélective en pré-levée et post-levée contre les végétaux adventices dans les cultures de céréales.

**Claims**

1. A synergistic agent for selectively controlling weeds in cereals, which contains as active components in addition to carriers and/or other adjuvants, on the other hand, N-[2-(2-chloroethoxy)phenylsulfonyl]-N'-(4-methoxy-6-methyl-1,3,5-triazin-2-yl)urea of the formula I

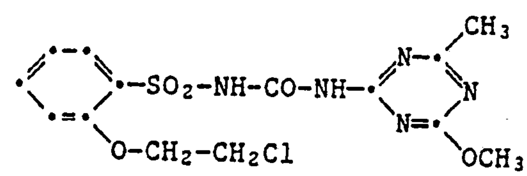

(I)

and, on the other hand, either an active substance of the formula II

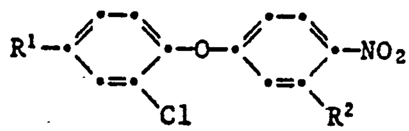

(II)

in which $R^1$ is chlorine or trifluoromethyl and $R^2$ is hydrogen, $C_1$—$C_4$alkoxycarbonyl, $C_1$—$C_4$alkoxy,

$-COONa$, $-COOK$, $-CH$, $-CO-NH-SO_2CH_3$, $-COO-CH(CH_3)-COOC_2H_5$,

$-C(CH_3)=N-O-CH_2-COOCH_3$ or $-COO-CH_2-COOC_2H_5$,

or an active substance of the formula III

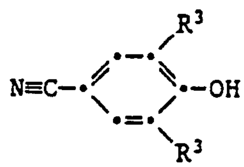

(III)

in which $R^3$ is bromine or iodine, or an active substance of the formula IV

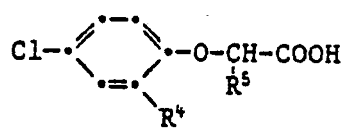

(IV)

in which $R^4$ is chlorine or methyl and $R^5$ is hydrogen or methyl, or an active substance of the formula V

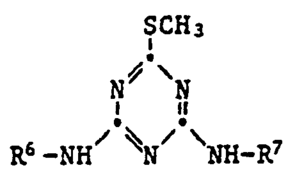

(V)

in which $R^6$ is ethyl or methoxypropyl and $R^7$ is isopropyl or tert-butyl, or the compound of the formula VIII

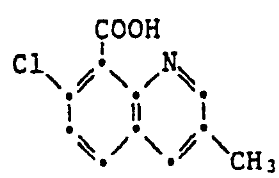

(VIII)

or the compound of the formula IX

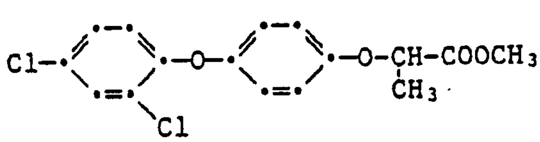

(IX)

or the compound of the formula X

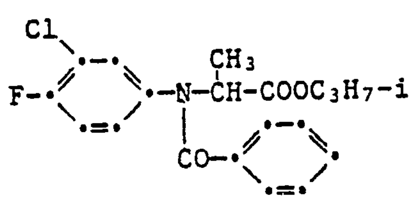

(X)

in admixture with each other.

2. An agent according to claim 1, which contains as second component, in addition to the component of the formula I, either
methyl 5-(2,4-dichlorophenoxy)-2-nitrobenzoate or
ethoxycarbonylmethyl 5-(2-chloro-4-trifluoromethylphenoxy)-2-nitrobenzoate or
3,5-dibromo-4-hydroxybenzonitrile or
3,5-diiodo-4-hydroxybenzonitrile or
2,4-dichlorophenoxyacetic acid or
4-chloro-2-methylphenoxyacetic acid or
2-(4-chloro-2-methylphenoxy)-propionic acid or
2-ethylamino-4-tert-butylamino-6-methylthio-1,3,5-triazine or
2-isopropylamino-4-(3-methoxypropylamino)-6-methylthio-1,3,5-triazine or
7-chloro-3-methylquinoline-8-carboxylic acid or
methyl 2-[4-(2,4-dichlorophenoxy)-phenoxy]propionate or
N-benzoyl-N-(3-chloro-4-fluorophenyl)alanine isopropyl ester.

3. An agent according to claim 1, which contains as second component, in the addition to the compound of the formula I, ethoxycarbonylmethyl 5-(2-chloro-4-trifluoromethylphenoxy)-2-nitrobenzoate.

4. An agent according to claim 1, which contains as second component, in the addition to the compound of the formula I, 3,5-dibromo-4-hydroxybenzonitrile.

5. An agent according to claim 1, which contains as second component, in the addition to the compound of the formula I, 7-chloro-3-methylquinoline-8-carboxylic acid.

6. An agent according to claim 1, wherein in the said agent component I is present in a weight ratio to the second component of the formulae II, III, IV, V, VIII, IX or X of between 1:1 and 1:2000.

7. An agent according to claim 6, wherein the weight ratio between component I and the component of the formulae II, III, IV, V, VIII, IX or X is from 1:5 to 1:500.

8. A method of selectively controlling weeds in cereals, which comprises treating weed-infested crops of cereals pre-emergence or post-emergence with an effective amount of an agent according to claim 1.

9. A method according to claim 8, wherein crops of cereals which contain as weeds monocotyledons of the genera Avena, Lolium of Setaria, and dicotyledons of the genera Sinapis, Stettaria or Veronica, are treated with the said agent.

10. A method according to claim 8, which comprises treating the crop of cereals with the said agent at rates of application which correspond to 0.005 to 3 kg, preferably 0.01 to 1 kg, of total active substance per hectare.

11. Use of an effective amount of an agent according to claim 1 for selectively controlling weeds pre-emergence and post emergence in crops of cereals.